# EUROPÄISCHE PATENTANMELDUNG

(11) **EP 2 706 262 A2**
(43) Veröffentlichungstag der Anmeldung: **12.03.2014**
(21) Anmeldenummer: 13181130.9
(22) Anmeldetag: 21.08.2013
(51) Int. Cl.: F16F 15/139, F16F 15/14, F16F 15/134

(54) **Drehmomentübertragungseinrichtung**

(30) Priorität: 06.09.2012 DE 102012215849
(71) Anmelder: Schaeffler Technologies AG & Co. KG, 91074 Herzogenaurach (DE)
(72) Erfinder: Maienschein, Stephan, 76534 Baden-Baden (DE); Krause, Thorsten, 77815 Bühl (DE)

(57) **Zusammenfassung**

Drehmomentübertragungseinrichtung (10) umfassend eine als Anfahrkupplung ausgebildete, nasslaufende Kupplungseinrichtung (38), wobei die Kupplungseinrichtung folgendes aufweist:
eine Reibeinrichtung (14) zum lösbaren Verbinden eines Kupplungseingangsteils (12) mit einem Kupplungsausgangsteil (16);
ein Kolbenelement (50) zur Bewirkung eines Reibeingriffs zwischen dem Kupplungseingangsteil und dem Kupplungsausgangsteil;
einen ersten Drehschwingungsdämpfer (20) mit einem ersten Dämpfereingangsteil und einem gegenüber diesem entgegen der Wirkung wenigstens eines ersten Energiespeicherelements begrenzt verdrehbaren ersten Dämpferausgangsteil;
eine Tilgereinrichtung (36) zur Tilgung von Drehschwingungen, umfassend einen Tilgermassenträger und eine daran aufgenommene Tilgermasse, wobei
ein zweiter Drehschwingungsdämpfer (28) mit einem zweiten Dämpfereingangsteil und einem gegenüber diesem entgegen der Wirkung wenigstens eines zweiten Energiespeicherelements begrenzt verdrehbaren zweiten Dämpferausgangsteil mit dem ersten Drehschwingungsdämpfer mittelbar oder unmittelbar verbunden ist.

## Beschreibung

Die Erfindung betrifft eine Drehmomentübertragungseinrichtung nach dem Oberbegriff von Anspruch 1.

Derartige Drehmomentübertragungseinrichtungen sind allgemein bekannt. So zeigt WO2010037661 eine Drehmomentübertragungseinrichtung umfassend eine nasslaufende Kupplung mit einer Reibeinrichtung zum lösbaren Verbinden eines Kupplungseingangsteils mit einem Kupplungsausgangsteil und einen Drehschwingungsdämpfer mit einem Dämpfereingangsteil und einem gegenüber diesem entgegen der Wirkung von Energiespeicherelementen begrenzt verdrehbaren Dämpferausgangsteil, sowie eine Tilgereinrichtung mit einem Tilgermassenträger und beidseitig daran aufgenommenen Tilgermassen.

Die Aufgabe liegt darin, eine verbesserte Drehschwingungsdämpfung zu bewirken.

Die Aufgabe wird durch alle Merkmale des Gegenstands gemäß Anspruch 1 gelöst.

Dementsprechend wird eine Drehmomentübertragungseinrichtung umfassend eine als Anfahrkupplung ausgebildete, nasslaufende Kupplungseinrichtung vorgeschlagen, wobei die Kupplungseinrichtung folgendes aufweist:
eine Reibeinrichtung zum lösbaren Verbinden eines Kupplungseingangsteils mit einem Kupplungsausgangsteil;
ein Kolbenelement zur Bewirkung eines Reibeingriffs zwischen dem Kupplungseingangsteil und dem Kupplungsausgangsteil;
einen ersten Drehschwingungsdämpfer mit einem ersten Dämpfereingangsteil und einem gegenüber diesem entgegen der Wirkung wenigstens eines ersten Energiespeicherelements begrenzt verdrehbaren ersten Dämpferausgangsteil;
eine Tilgereinrichtung zur Tilgung von Drehschwingungen, umfassend einen Tilgermassenträger und eine daran aufgenommene Tilgermasse. Dabei ist ein zweiter Drehschwingungsdämpfer mit einem zweiten Dämpfereingangsteil und einem gegenüber diesem entgegen der Wirkung wenigstens eines zweiten Energiespeicherelements begrenzt verdrehbaren zweiten Dämpferausgangsteil mit dem ersten Drehschwingungsdämpfer mittelbar oder unmittelbar verbunden. Dadurch kann die Drehschwingungsdämpfung verbessert werden.

In einer weiteren vorteilhaften speziellen Ausgestaltung der Erfindung weist die Kupplungseinrichtung ein Kupplungsgehäuse und eine Abtriebsnabe auf und die Drehmomentübertragung zwischen Kupplungsgehäuse und Abtriebsnabe kann ausschließlich über den Drehmomentübertragungsweg durch die Reibeinrichtung erfolgen. Insbesondere bildet dieser Drehmomentübertragungsweg die einzige Möglichkeit der Übertragung eines Drehmoments zwischen Antriebsseite und Abtriebsseite.

In einer weiteren vorteilhaften speziellen Ausgestaltung der Erfindung ist die Tilgereinrichtung als drehzahladaptives Fliehkraftpendel ausgebildet. Dabei kann insbesondere ein Pendelmassenträger mit axial beidseitig aufgenommenen und verdrehbaren Pendelmassen vorgesehen sein.

In einer weiteren vorteilhaften speziellen Ausgestaltung der Erfindung ist die Tilgereinrichtung wirksam vor dem ersten Drehschwingungsdämpfer und dem zweiten Drehschwingungsdämpfer angeordnet. Auch kann die Tilgereinrichtung wirksam zwischen dem ersten Drehschwingungsdämpfer und dem zweiten Drehschwingungsdämpfer angeordnet sein, wodurch die in der Tilgereinrichtung eingehenden Drehungleichförmigkeiten durch den im Kraftfluß vorgeschalteten ersten Drehschwingungsdämpfer begrenzt werden können und zusätzlich durch den zweiten Drehschwingungsdämpfer der Schwingwinkel der Pendelmassen der beispielsweise als Fliehkraftpendel ausgebildeten Tilgereinrichtung beeinflusst werden kann. Somit kann bei gegebenen Bauraumverhältnissen und Art des Antriebstranges eine zur Schwingungsisolation optimal wirkende Tilgereinrichtung gestaltet werden

In einer weiteren speziellen Ausführungsform der Erfindung ist die Tilgereinrichtung wirksam nach dem ersten Drehschwingungsdämpfer und dem zweiten Drehschwingungsdämpfer angeordnet.

In einer weiteren speziellen Ausführungsform der Erfindung ist wenigstens eines des ersten oder zweiten Energiespeicherelements eine gerade Druckfeder oder eine Bogenfeder. Weiterhin kann wenigstens ein weiteres des ersten oder zweiten Energiespeicherelements eine gerade Druckfeder oder eine Bogenfeder sein.

In einer weiteren speziellen Ausführungsform der Erfindung sind wenigstens zwei Energiespeicherelemente wenigstens eines Drehschwingungsdämpfers in Reihe und/oder parallel wirksam angeordnet.

In einer weiteren speziellen Ausführungsform der Erfindung weist wenigstens ein Energiespeicherelement wenigstens eines Drehschwingungsdämpfers eine mehrstufige Kennlinie auf.

In einer weiteren speziellen Ausführungsform der Erfindung weisen wenigstens zwei Energiespeicherelemente wenigstens eines Drehschwingungsdämpfers eine unterschiedliche Steifigkeit auf.

In einer weiteren speziellen Ausführungsform der Erfindung ist wenigstens ein Energiespeicherelement wenigstens eines Drehschwingungsdämpfers vor oder bei Erreichen eines maximalen zu übertragenden Drehmoments in seiner Auslenkung begrenzt.

In einer weiteren speziellen Ausführungsform der Erfindung sind wenigstens zwei Energiespeicherelemente vollständig oder abschnittsweise radial und/oder axial überlappend angeordnet.

In einer weiteren speziellen Ausführungsform der Erfindung ist die nasslaufende Kupplungseinrichtung als Zweikanalkupplung mit Umkehr der Strömungsrichtung zum jeweiligen Schließen oder Öffnen der Reibeinrichtung oder als Dreikanalkupplung ausgebildet.

In einer weiteren speziellen Ausgestaltung der Erfindung ist das Kupplungsausgangsteil einteilig mit dem ersten Dämpfereingangsteil ausgebildet.

Auch können weitere Drehschwingungsdämpfer vorgesehen sein, die mit dem ersten und/oder zweiten Drehschwingungsdämpfer verbunden sind und in dem Kupplungsgehäuse angeordnet sind. Diese weiteren Drehschwingungsdämpfer können gegenüber dem ersten und/oder zweiten Drehschwingungsdämpfer parallel oder in Reihe wirksam eingebunden sein.

Weitere Vorteile und vorteilhafte Ausgestaltungen der Erfindung ergeben sich aus der Beschreibung und den Abbildungen, bei deren Darstellung zugunsten der Übersichtlichkeit auf eine maßstabsgetreue Wiedergabe verzichtet wurde. Alle erläuterten Merkmale sind nicht nur in der angegebenen Kombination, sondern auch in anderen Kombinationen beziehungsweise in Alleinstellung anwendbar, ohne den Rahmen der Erfindung zu verlassen.

Die Erfindung wird im Folgenden unter Bezugnahme auf die Abbildungen im Speziellen beschrieben. Es zeigen im Einzelnen:
- Figur 1a:: Prinzipschaltbild einer Drehmomentübertragungseinrichtung in einer speziellen Ausführungsform der Erfindung.
- Figur 1b:: Prinzipschaltbild einer Drehmomentübertragungseinrichtung in einer weiteren speziellen Ausführungsform der Erfindung.
- Figur 1c:: Prinzipschaltbild einer Drehmomentübertragungseinrichtung in einer weiteren speziellen Ausführungsform der Erfindung.
- Figur 2:: Querschnitt eines Ausschnitts einer Drehmomentübertragungseinrichtung in einer speziellen Ausführungsform der Erfindung.
- Figur 3:: Querschnitt eines Ausschnitts einer Drehmomentübertragungseinrichtung in einer weiteren speziellen Ausführungsform der Erfindung.
- Figur 4:: Seitenansicht eines Ausschnitts der Drehmomentübertragungseinrichtung aus Figur 3.

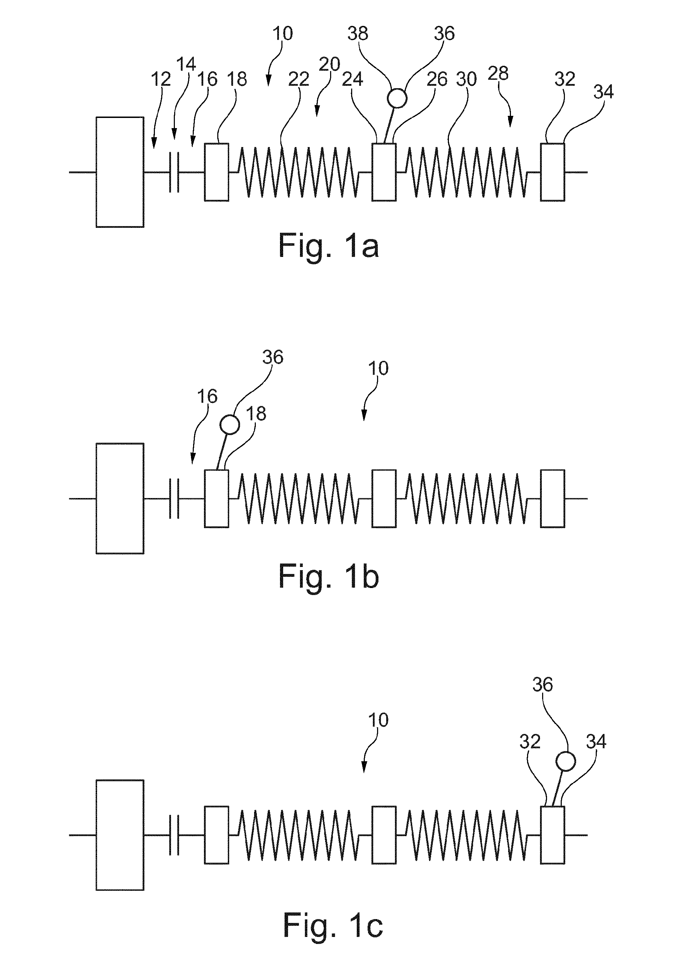

Figur 1a zeigt ein Prinzipschaltbild einer Drehmomentübertragungseinrichtung 10 in einer speziellen Ausführungsform der Erfindung. Dabei ist ein Kupplungseingangsteil 12 über eine Reibeinrichtung 14 mit einem Kupplungsausgangsteil 16 verbindbar. Das Kupplungsausgangsteil 16 ist mit einem ersten Dämpfereingangsteil 18 eines ersten Drehschwingungsdämpfers 20 verbunden oder einteilig mit diesem ausgeführt. Das erste Dämpfereingangsteil 18 ist über die Wirkung erster Energiespeicherelemente 22 gegenüber einem ersten Dämpferausgangsteil 24 begrenzt verdrehbar.

An dem ersten Dämpferausgangsteil 24 ist ein zweites Dämpfereingangsteil 26 eines zweiten Drehschwingungsdämpfers 28 befestigt oder einteilig mit diesem ausgeführt. Das zweite Dämpfereingangsteil 26 ist über die Wirkung zweiter Energiespeicherelemente 30 gegenüber einem zweiten Dämpferausgangsteil 32 begrenzt verdrehbar. Das zweite Dämpferausgangsteil 32 ist mit einer Abtriebsnabe 34 verbunden oder einteilig damit ausgeführt. An dem ersten Dämpferausgangsteil 24 und/oder an dem zweiten Dämpfereingangsteil 26 ist eine Tilgereinrichtung 36, vorzugsweise eine Fliehkraftpendeleinrichtung 38 angebracht.

In Figur 1b ist ein Prinzipschaltbild einer Drehmomentübertragungseinrichtung 10 in einer weiteren speziellen Ausführungsform der Erfindung dargestellt. Hier ist die Tilgereinrichtung 36 an dem Kupplungsausgangsteil 16 und/oder an dem ersten Dämpfereingangsteil 18 angebracht.

Figur 1c zeigt ein Prinzipschaltbild einer Drehmomentübertragungseinrichtung 10 in einer weiteren speziellen Ausführungsform der Erfindung. Dabei ist die Tilgereinrichtung 36 an dem zweiten Dämpferausgangsteil 32 und/oder der Abtriebsnabe 34 angebracht.

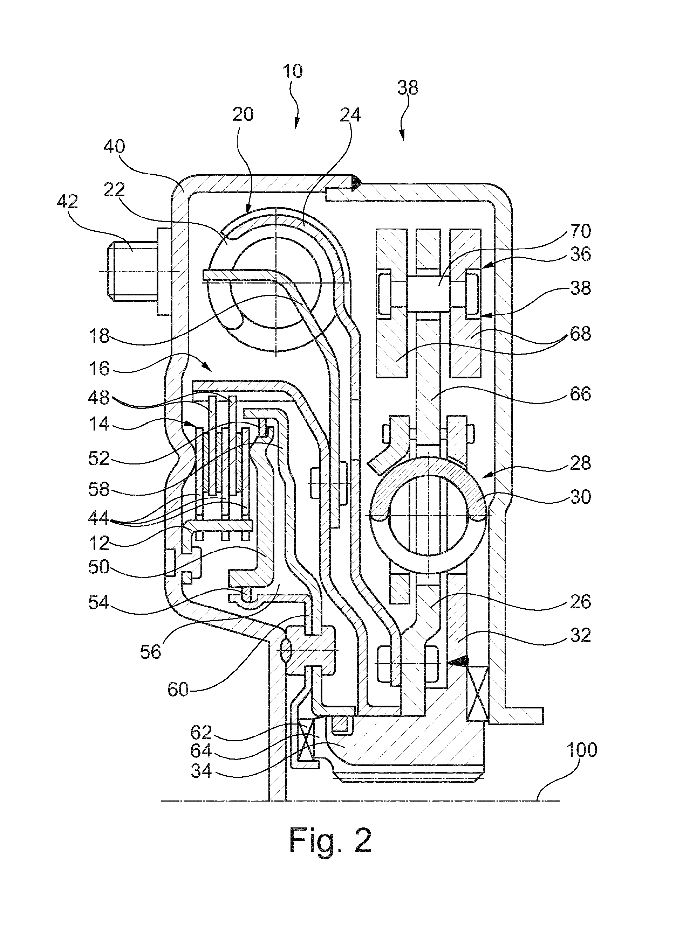

In Figur 2 ist ein Querschnitt eines Ausschnitts einer Drehmomentübertragungseinrichtung 10 in einer speziellen Ausführungsform der Erfindung dargestellt. Bestandteil der Drehmomentübertragungseinrichtung 10 bildet eine als Anfahrkupplung ausgebildete und um eine Drehachse 100 drehbare nasslaufende Kupplungseinrichtung 38, die von einem zweiteilig ausgebildeten Kupplungsgehäuse 40 umschlossen wird, worin ein Fluid aufgenommen oder aufnehmbar ist. Das Kupplungsgehäuse 40 ist mit einem Mitnehmerelement 42 mit einer Antriebsseite verbindbar. Das Mitnehmerelement 42 ist an dem Kupplungsgehäuse 38 befestigt, insbesondere verschweißt oder vernietet.

In dem Kupplungsgehäuse 40 ist ein Kupplungseingangsteil 12 eingebracht, das mit dem Kupplungsgehäuse 40 drehfest verbunden ist, insbesondere vernietet ist. Das Kupplungsausgangsteil 12 ist als Innenlamellenträger ausgeführt und nimmt über eine Verzahnung axial verschiebbar aber drehfest antriebsseitige Reiblamellen 44 auf. Die antriebsseitigen Reiblamellen 44 sind Bestandteil der Reibeinrichtung 14 zum Schließen und Öffnen der Kupplung und können in Reibkontakt mit abtriebsseitigen Reiblamellen 48 gebracht werden.

Zur Betätigung der Kupplung ist ein axial verschiebbares Kolbenelement 50 vorgesehen, das radial aussen und radial innen über jeweils eine Dichtung einen Teil einer Abtrennung einer Fluidkammer 56 bildet. Die Fluidkammer 56 dient der Aufnahme eines Fluids zur Betätigung der Kupplung über das Kolbenenelement 50 und die Reibeinrichtung 14. Durch diese Anordnung ist die Kupplungseinrichtung 38 als Dreikanal-Kupplung ausgebildet.

Die Fluidkammer 56 wird durch ein Wandelement 58 begrenzt, das mit dem Kupplungsgehäuse 40 verbunden ist, insbesondere vernietet ist. An dem Kupplungsgehäuse 40 ist ein weiteres Wandelement 60 befestigt, insbesondere über die gleiche Befestigungsstelle wie bei dem Wandelement 58. Das Wandelement 60 begrenzt die Fluidkammer radial innen und dient vorzugsweise der Aufnahme des Kolbenelements 50. Radial weiter innen ist das Wandelement 60 derart ausgebildet, so dass es ein Lagerelement 62 aufnehmen kann.

Das Lagerelement 62 ist zwischen dem Wandelement 60 und einer Abtriebsnabe 34 angeordnet. Zwischen dem Lagerelement 62 und der Abtriebsnabe 34 ist ein Fluiddurchgang 64 vorhanden, so dass Fluid von einer Öffnung in der Abtriebsnabe 34 über ein hier nicht gezeigten Spalt zwischen Wandelement 58 und Wandelement 60 in die Fluidkammer 56 und zurück gelangen kann.

Die abtriebsseitigen Reiblamellen 48 sind an einem als Aussenlamellenträger ausgebildeten Kupplungsausgangsteil 16 aufgenommen und mit diesem drehfest aber axial verschiebbar über eine Verzahnung verbunden. Das Kupplungsausgangsteil 16 ist nach radial innen verlängert und auf der Abtriebsnabe 34 aufgenommen, insbesondere gelagert. An dem Kupplungsausgangsteil 16 ist ein erstes Dämpfereingangsteil 18 befestigt, insbesondere vernietet. Das erste Dämpfereingangsteil 18 ist Bestandteil eines ersten Drehschwingungsdämpfers 20 und ist zur Beaufschlagung von ersten Energiespeicherelementen 22, die insbesondere als Schraubenfedern, speziell als Bogenfedern ausgebildet sind, vorgesehen.

Die ersten Energiespeicherelemente 22 sind radial außerhalb der Reibeinrichtung 14 angeordnet. Bei Beaufschlagung der ersten Energiespeicherelemente 22 mit einer Kraft durch das erste Dämpfereingangsteil 18 erfolgt eine Kraftweiterleitung an ein gegenüber dem ersten Dämpfereingangsteil 18 begrenzt verdrehbares erstes Dämpferausgangsteil 24, das sich hierzu ebenfalls mit den ersten Energiespeicherelementen 22 in Eingriff befindet. Das erste Dämpferausgangsteil 18 ist insbesondere als Retainer ausgebildet und ist radial innerhalb der Reibeinrichtung 14 mit einem zweiten Dämpfereingangsteil 26 eines zweiten Drehschwingungsdämpfers 28 verbunden, insbesondere vernietet.

Das zweite Dämpfereingangsteil 26 kann mit zweiten Energiespeicherelementen 30, insbesondere Schraubenfedern, speziell geraden Druckfedern, in Eingriff gebracht werden. Die Kraft wird durch die zweiten Energiespeicherelemente 30 auf ein zweites Dämpferausgangsteil 32 übertragen, das gegenüber dem zweiten Dämpfereingangsteil 26 begrenzt verdrehbar ist.

Sowohl die Auslenkung der ersten Energiespeicherelemente 22 als auch die Auslenkung der zweiten Energiespeicherelemente 30 kann durch einen Anschlag begrenzt werden, so dass vor oder bei Erreichen eines maximalen zu übertragenden Drehmoments eine Begrenzung der Auslenkung erfolgen kann. Dies kann der Beeinflussung des Dämpfungsverhaltens der Drehmomentübertragungseinrichtung dienen.

Das zweite Dämpferausgangsteil 32 ist zweiteilig ausgeführt und umschließt das zweite Dämpfereingangsteil 26 axial, insbesondere jeweils als Dämpferseitenscheibenteil. Das zweite Dämpferausgangsteil 32 ist mit einer Abtriebsnabe 34 verbunden, vorzugsweise verschweißt. Die Abtriebsnabe 34 ist über ein Lagerelement gegenüber dem Kupplungsgehäuse verdrehbar und mit einer Getriebeeingangswelle verbindbar, insbesondere über eine Verzahnung.

An dem zweiten Dämpfereingangsteil 26 ist eine Tilgereinrichtung 36 angeordnet, insbesondere radial außerhalb der zweiten Energiespeicherelemente 30. Die Tilgereinrichtung 36 ist als drehzahladaptives Fliehkraftpendel 38 ausgebildet mit einem Pendelmassenträger 66, der einteilig mit dem zweiten Dämpfereingangsteil 26 ausgeführt ist oder zumindest mit diesem verbunden ist. Der Pendelmassenträger 66 nimmt in einem radial äußeren Bereich axial beidseitig Pendelmassen 68 auf, die über Abstandsbolzen 70 miteinander verbunden sind. Die Abstandsbolzen 70 greifen hierzu durch entsprechende Ausschnitte in dem Pendelmassenträger 66 durch. Die Pendelmassen 68 sind über in dem Pendelmassenträger 66 aufgenommene Abrollelemente gegenüber dem Pendelmassenträger 66 entlang einer Pendellaufbahn begrenzt verlagerbar ist. Dadurch kann eine drehzahlabhängige Tilgung von Drehschwingungen bewirkt werden.

Die Tilgereinrichtung 36 ist axial benachbart zu dem ersten Drehschwingungsdämpfer 20 angeordnet. Die Pendelmassen 68 und die ersten Energiespeicherelemente 22 sind in Bezug auf die Drehachse 100 radial überlappend angeordnet.

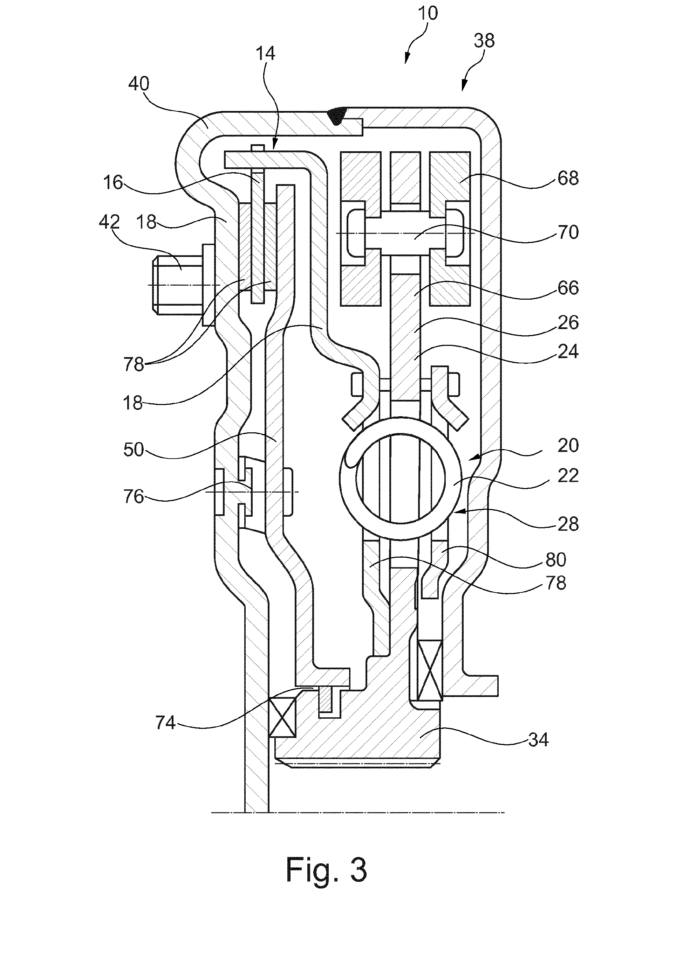

Figur 3 zeigt einen Querschnitt eines Ausschnitts einer Drehmomentübertragungseinrichtung 10 in einer weiteren speziellen Ausführungsform der Erfindung. Bestandteil der Drehmomentübertragungseinrichtung 10 bildet eine als Anfahrkupplung ausgebildete nasslaufende Kupplungseinrichtung 38, die von einem zweiteilig ausgebildeten Kupplungsgehäuse 40 umschlossen wird, worin ein Fluid aufgenommen oder aufnehmbar ist. Das Kupplungsgehäuse 40 ist mit einem Mitnehmerelement 42 mit einer Antriebsseite verbindbar. Das Mitnehmerelement 42 ist an dem Kupplungsgehäuse 40 befestigt, insbesondere verschweißt oder vernietet.

An einer vorzugsweise radial weiter außen liegenden Stelle kann das Kupplungsgehäuse 40 über eine Reibeinrichtung 14 in Reibkontakt mit einem Kupplungsausgangsteil 16 gebracht werden. Dazu ist ein Abschnitt des Kupplungsgehäuses 40 als Kupplungseingangsteil 12 ausgeführt und kann über wenigstens einen Reibbelag 72 mit dem Kupplungsausgangsteil 16 verbunden werden. Die Betätigung der Kupplung erfolgt durch ein Kolbenelement 50, das axial verlagerbar auf einer Abtriebsnabe 34 und gegenüber dieser mit Hilfe einer Dichtung 74 abgedichtet aufgenommen ist. An dem Kupplungsgehäuse 40 ist das Kolbenelement 50 drehfest mit einer Nietverbindung 76 befestigt.

In einem radial außerhalb der Reibeinrichtung 14 liegenden Abschnitt ist das Kupplungsausgangsteil 16 über einer Verzahnung mit einem ersten Dämpfereingangsteil 18 eines ersten Drehschwingungsdämpfers 20, insbesondere axial verschiebbar verbunden. Das erste Dämpfereingangsteil 18 ist vorzugsweise als Seitenscheibenelement ausgeführt zur Beaufschlagung der ersten Energiespeicherelemente 22. Die in die ersten Energiespeicherelemente 22 eingeleitete Kraft kann auf ein erstes Dämpferausgangsteil 24 übertragen werden, das hierzu gegenüber dem ersten Dämpfereingangsteil 18 begrenzt verdrehbar ist. Das erste Dämpferausgangsteil 24 ist insbesondere als Dämpferflansch ausgeführt und befindet sich axial mittig zwischen dem ersten Seitenscheibenelement 78 und einem, ebenfalls dem ersten Dämpfereingangsteil 18 zugeordneten zweiten Seitenscheibenelement 80.

Das erste Dämpferausgangsteil 24 ist mit einem zweiten Dämpfereingangsteil 26 verbunden oder einteilig mit diesem ausgebildet. Insbesondere ist dieses als Zwischenflansch ausgebildet und auf der Abtriebsnabe 34 aufgenommen, insbesondere gelagert. An dem ersten Dämpferausgangsteil 24 oder dem zweiten Dämpfereingangsteil 26 ist eine Tilgereinrichtung 34, insbesondere eine Fliehkraftpendeleinrichtung 36 angeordnet. Die Fliehkraftpendeleinrichtung 36 umfasst einen Pendelmassenträger 66, an dem beidseitig gegenüber diesem verlagerbare und zu einem Pendelmassenpaar verbundene Pendelmassen 68 angeordnet sind. Zu der Verbindung der Pendelmassen 68 zu einem Pendelmassenpaar dienen durch den Pendelmassenträger 66 durchgreifende Abstandsbolzen 70. Das Pendelmassenpaar ist wiederum mit Hilfe von durch den Pendelmassenträger 66 durchgreifende Abrollelemente gegenüber dem Pendelmassenträger 66 begrenzt entlang einer Pendellaufbahn verlagerbar. Die Abrollelemente können als Wälzkörper oder als Lagerelemente, beispielsweise Rollenlager ausgeführt sein.

Der Pendelmassenträger 66 ist mit dem ersten Dämpferausgangsteil 24 oder dem zweiten Dämpfereingangsteil 26 drehfest verbunden oder einteilig mit diesem ausgeführt. Das zweite Dämpfereingangsteil 26 ist über die Wirkung zweiter Energiespeicherelemente 30 gegenüber einem zweiten Dämpferausgangsteil 32 begrenzt verdrehbar. Das zweite Dämpferausgangsteil 32 ist mit einer Abtriebsnabe 34 verbunden, insbesondere verschweißt. Die Abtriebsnabe 34 ist mit einer Getriebeeingangswelle verbindbar, vorzugsweise über eine Verzahnung.

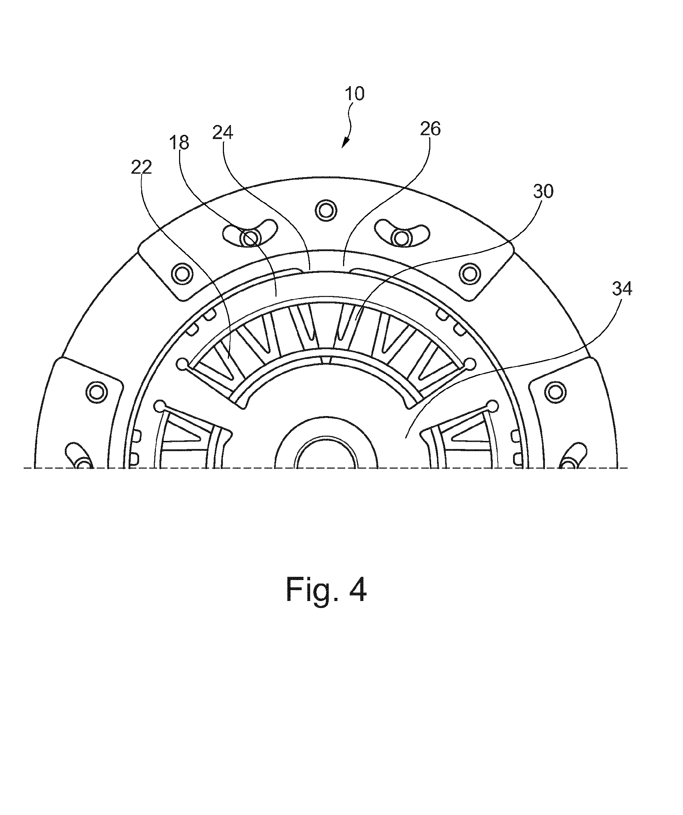

In Figur 4 ist eine Seitenansicht eines Ausschnitts der Drehmomentübertragungseinrichtung 10 aus Figur 3 dargestellt. Hier wird die Anordnung der ersten Energiespeicherelemente 22 und zweiten Energiespeicherelemente 30 deutlich, die insbesondere auf einem gleichen Wirkradius eingebracht sind. Das erste Dämpfereingangsteil 18 und/oder das Kupplungsausgangsteil wie auch das zweite Dämpfereingangsteil 26 und/oder das erste Dämpferausgangsteil 24 sind jeweils auf der Abtriebsnabe 34 oder einem damit fest verbundenen Bauteil aufgenommen, vorzugsweise gelagert.

### Bezugszeichenliste

- 10: Drehmomentübertragungseinrichtung
- 12: Kupplungseingangsteil
- 14: Reibeinrichtung
- 16: Kupplungsausgangsteil
- 18: Dämpfereingangsteil
- 20: Drehschwingungsdämpfer
- 22: Energiespeicherelement
- 24: Dämpferausgangsteil
- 26: Dämpfereingangsteil
- 28: Drehschwingungsdämpfer
- 30: Energiespeicherelement
- 32: Dämpferausgangsteil
- 34: Abtriebsnabe
- 36: Tilgereinrichtung
- 38: Fliehkraftpendeleinrichtung
- 40: Kupplungsgehäuse
- 42: Mitnehmerelement
- 44: Reiblamellen

- 48: Reiblamellen
- 50: Kolbenelement

- 56: Fluidkammer
- 58: Wandelement
- 60: Wandelement
- 62: Lagerelement
- 64: Fluiddurchgang
- 66: Pendelmassenträger
- 68: Pendelmassen
- 70: Abstandsbolzen
- 72: Reibbelag
- 74: Dichtung
- 76: Nietverbindung
- 78: Seitenscheibenelement
- 80: Seitenscheibenelement

- 100: Drehachse

## Patentansprüche

1. Drehmomentübertragungseinrichtung (10) umfassend eine als Anfahrkupplung ausgebildete, nasslaufende Kupplungseinrichtung (38), aufweisend:
eine Reibeinrichtung (14) zum lösbaren Verbinden eines Kupplungseingangsteils (12) mit einem Kupplungsausgangsteil (16);
ein Kolbenelement (50) zur Bewirkung eines Reibeingriffs zwischen dem Kupplungseingangsteil (12) und dem Kupplungsausgangsteil (16);
einen ersten Drehschwingungsdämpfer (20) mit einem ersten Dämpfereingangsteil (18) und einem gegenüber diesem entgegen der Wirkung wenigstens eines ersten Energiespeicherelements (22) begrenzt verdrehbaren ersten Dämpferausgangsteil (24);
eine Tilgereinrichtung (36) zur Tilgung von Drehschwingungen, umfassend einen Tilgermassenträger (66) und eine daran aufgenommene Tilgermasse (68),
**dadurch gekennzeichnet, dass** ein zweiter Drehschwingungsdämpfer (28) mit einem zweiten Dämpfereingangsteil (26) und einem gegenüber diesem entgegen der Wirkung wenigstens eines zweiten Energiespeicherelements (30) begrenzt verdrehbaren zweiten Dämpferausgangsteil (32) mit dem ersten Drehschwingungsdämpfer (20) mittelbar oder unmittelbar verbunden ist.

2. Drehmomentübertragungseinrichtung (10) nach Anspruch 1, wobei die Kupplungseinrichtung (38) ein Kupplungsgehäuse (40) und eine Abtriebsnabe (34) aufweist und die Drehmomentübertragung zwischen Kupplungsgehäuse (40) und Abtriebsnabe (34) ausschließlich über den Drehmomentübertragungsweg durch die Reibeinrichtung (14) erfolgen kann.

3. Drehmomentübertragungseinrichtung (10) nach einem der Ansprüche 1 oder 2, wobei die Tilgereinrichtung (36) als drehzahladaptives Fliehkraftpendel (38) ausgebildet ist.

4. Drehmomentübertragungseinrichtung (10) nach einem der Ansprüche 1 bis 3, wobei die Tilgereinrichtung (36) wirksam vor dem ersten Drehschwingungsdämpfer (20) und dem zweiten Drehschwingungsdämpfer (28) angeordnet ist.

5. Drehmomentübertragungseinrichtung (10) nach einem der Ansprüche 1 bis 3, wobei die Tilgereinrichtung (36) wirksam zwischen dem ersten Drehschwingungsdämpfer (20) und dem zweiten Drehschwingungsdämpfer (28) angeordnet ist.

6. Drehmomentübertragungseinrichtung (10) nach einem der Ansprüche 1 bis 3, wobei die Tilgereinrichtung (36) wirksam nach dem ersten Drehschwingungsdämpfer (20) und dem zweiten Drehschwingungsdämpfer (28) angeordnet ist.

7. Drehmomentübertragungseinrichtung (10) nach einem der Ansprüche 1 bis 6, wobei wenigstens eines des ersten oder zweiten Energiespeicherelements (22, 30) eine gerade Druckfeder oder eine Bogenfeder ist.

8. Drehmomentübertragungseinrichtung (10) nach Anspruch 7, wobei wenigstens ein weiteres des ersten oder zweiten Energiespeicherelements (22, 30) eine gerade Druckfeder oder eine Bogenfeder ist.

9. Drehmomentübertragungseinrichtung (10) nach einem der Ansprüche 1 bis 8, wobei wenigstens zwei Energiespeicherelemente (22, 30) wenigstens eines Drehschwingungsdämpfers (20, 28) in Reihe und/oder parallel wirksam angeordnet sind.

10. Drehmomentübertragungseinrichtung (10) nach einem der Ansprüche 1 bis 9, wobei wenigstens ein Energiespeicherelement (22, 30) wenigstens eines Drehschwingungsdämpfers (20, 28) eine mehrstufige Kennlinie aufweist.

11. Drehmomentübertragungseinrichtung (10) nach einem der Ansprüche 1 bis 10, wobei wenigstens zwei Energiespeicherelemente (22, 30) wenigstens eines Drehschwingungsdämpfers (20, 28) eine unterschiedliche Steifigkeit aufweisen.

12. Drehmomentübertragungseinrichtung (10) nach einem der Ansprüche 1 bis 11, wobei wenigstens ein Energiespeicherelement (22, 30) wenigstens eines Drehschwingungsdämpfers (20, 28) vor oder bei Erreichen eines maximalen zu übertragenden Drehmoments in seiner Auslenkung begrenzt ist.

13. Drehmomentübertragungseinrichtung (10) nach einem der Ansprüche 1 bis 12, wobei wenigstens zwei Energiespeicherelemente (22, 30) vollständig oder abschnittsweise radial und/oder axial überlappend angeordnet sind.

14. Drehmomentübertragungseinrichtung (10) nach einem der Ansprüche 1 bis 13, wobei die nasslaufende Kupplungseinrichtung (38) als Zweikanalkupplung mit Umkehr der Strömungsrichtung zum jeweiligen Schließen oder Öffnen der Reibeinrichtung (14) oder als Dreikanalkupplung ausgebildet ist.

15. Drehmomentübertragungseinrichtung (10) nach einem der Ansprüche 1 bis 14, wobei das Kupplungsausgangsteil (16) einteilig mit dem ersten Dämpfereingangsteil (18) ausgebildet ist.
